Europäisches Patentamt

European Patent Office

Office européen des brevets

(19)

(11) Veröffentlichungsnummer: **0 012 914**
**B1**

(12) **EUROPÄISCHE PATENTSCHRIFT**

(45) Veröffentlichungstag der Patentschrift:
13.04.83

(21) Anmeldenummer: 79105068.5

(22) Anmeldetag: 10.12.79

(51) Int. Cl.³: **H 02 K 9/19,** H 02 K 55/04,
F 16 L 39/04

(54) Kühlmittelanschlusskopf für eine elektrische Maschine mit supraleitender Läuferwicklung.

(30) Priorität: 27.12.78 DE 2856128

(43) Veröffentlichungstag der Anmeldung:
09.07.80 Patentblatt 80/14

(45) Bekanntmachung des Hinweises auf die Patenterteilung:
13.04.83 Patentblatt 83/15

(84) Benannte Vertragsstaaten:
CH FR GB

(56) Entgegenhaltungen:
DE-A-2 525 693
FR-A-1 350 388
US-A-3 242 418
US-A-3 991 588

(73) Patentinhaber: SIEMENS AKTIENGESELLSCHAFT,
Berlin und München Wittelsbacherplatz 2,
D-8000 München 2 (DE)

(72) Erfinder: Kullmann, Dieter, Dipl.-Ing., Nürnberger
Strasse 10, D-8506 Langenzenn (DE)

### Kühlmittelanschlußkopf für eine elektrische Maschine mit supraleitender Läuferwicklung

Die Erfindung bezieht sich auf einen Kühlmittelanschlußkopf für eine elektrische Maschine, die einen um eine Achse drehbar gelagerten Läufer mit einer von einem Kühlmittel tiefzukühlenden, supraleitenden Wicklung enthält, mit einer Vorrichtung zur Einspeisung des Kühlmittels aus einem nicht-rotierenden Kühlmittelleitungsteil in einen rotierenden, mit dem Läufer verbundenen Kühlmittelleitungsteil, die mindestens eine Dichtungseinrichtung enthält, welche zur Abdichtung eines zwischen diesen Leitungsteilen ausgebildeten Zwischenraumes dient, und die im Betriebszustand der Maschine eine vorbestimmte, von der an ihr herrschenden Druckdifferenz abhängige Leckrate zuläßt.

Derartige Kühlmittelanschlußköpfe sind aus der Literaturstelle »Advances in Cryogenic Engineering«, Vol. 23, New York 1978, Seiten 125 bis 131 und aus US-A-3 991 588 bekannt.

Zur Kühlung einer supraleitenden Wicklung im Läufer einer elektrischen Maschine, insbesondere eines Turbogenerators, müssen Vorrichtungen zur Überleitung eines Kühlmittels zwischen dem Läufer und feststehenden Anschlußleitungen vorgesehen werden. Über eine solche Vorrichtung wird das Kühlmittel, beispielsweise flüssiges oder gasförmiges Helium, der Wicklung im Läufer zugeführt bzw. aus diesem wieder abgeleitet. Die Maschine ist deshalb mit einem Anschlußkopf versehen, der eine entsprechende Überleitungsvorrichtung enthält. Die Gestaltung dieser Vorrichtung, die auch als Kupplung bezeichnet wird, ist vor allem im Hinblick auf möglichst geringe thermische Verluste des Kühlmittelkreislaufs für die supraleitende Wicklung und im Hinblick auf kleine Leckraten des Kühlmittels besonders schwierig. Die Kupplungen müssen nämlich rotierende Dichtungen mit verhältnismäßig geringer Reibung haben, die das Kühlmittel, insbesondere das flüssige Helium, einerseits gegen den Außenraum abdichten und die andererseits innerhalb des rotierenden Systems die Eingangs- von der Ausgangsseite trennen. Die hierfür erforderlichen Dichtungseinrichtungen müssen darüber hinaus radiale und axiale Wellenspiele des Läufers zulassen und über längere Zeiten, beispielsweise einige Jahre, störungsfrei arbeiten.

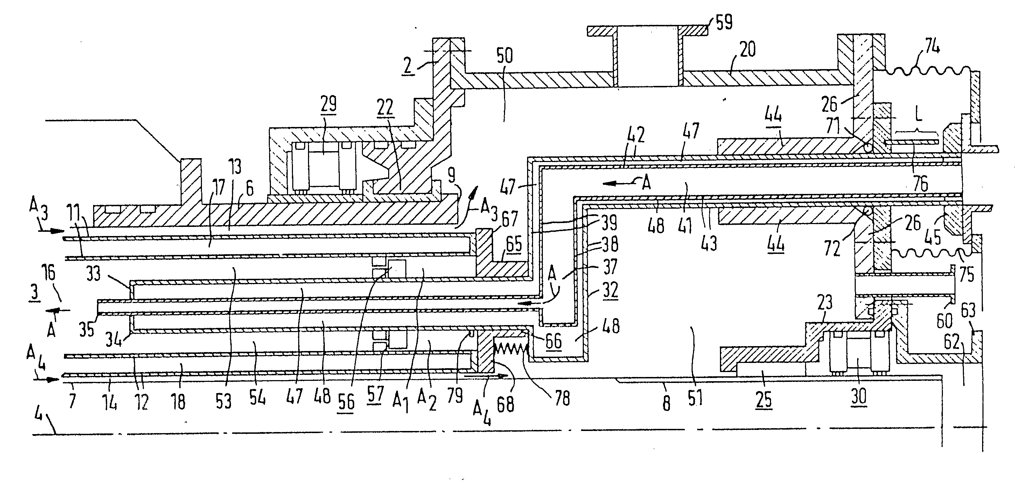

Der bekannte Kühlmittelanschlußkopf enthält eine entsprechende Helium-Kupplung. Er ist mit einem hohlzylindrischen, ortsfesten Gehäuse versehen, in dessen Innenraum eine rohrförmige Zuführungsleitung hineinragt. Das offene Endstück dieses Zuführungsrohres ist von einem Endstück eines mit den rotierenden Teilen der Maschine fest verbundenen Leitungsrohres konzentrisch umgeben, so daß zwischen diesen beiden Rohren ein ringförmiger Zwischenraum ausgebildet ist. Die konzentrische Lage der beiden Rohrstücke innerhalb des Gehäuses ist über hierfür vorgesehene Läger gewährleistet. Um ein Austreten des eingespeisten Heliums über den Zwischenraum nach außen zu verhindern, ist beispielsweise eine Dichtung mit einem vorbestimmten Spalt vorgesehen (vgl. Fig. 3). Der Spalt ist dabei so bemessen, daß bei radialen und axialen Schwingungen der Läuferwelle eine Berührung zwischen rotierenden und feststehenden Teilen der Überleitungsvorrichtung vermieden wird, um so Reibungswärmen und Verschleiß von Dichtungsteilen auszuschließen. Da im allgemeinen der Dichtungsspalt nicht beliebig klein gemacht werden kann, muß jedoch eine gewisse Leckrate an der Dichtung in Kauf genommen werden.

Diese Leckraten an Dichtungseinrichtungen mit Spalten zwischen rotierenden und nicht-rotierenden, weitgehend berührungslosen Dichtungsteilen können dann verhältnismäßig klein gehalten werden, wenn für das Kühlsystem der Wicklung der Läufer ein sogenannter Selbstpump-Effekt in Thermosyphon-Schleifen ausgenutzt wird (vgl. die Zeitschrift »Cryogenics«, Juli 1977, Seiten 429 bis 433 und die DE-A1-2 530 100). Dann ist nämlich das Kühlmittel nur mit einem verhältnismäßig geringen Überdruck an der Überleitungsvorrichtung in den Läufer einzuspeisen, so daß an den Dichtungseinrichtungen ein entsprechend geringer Druckunterschied herrscht. Dies trifft jedoch nur für das Kühlsystem im abgekühlten Zustand zu. Während der Abkühlphase der Wicklung und insbesondere während der Anfangsphase ist nämlich der Strömungswiderstand des Kühlsystems noch sehr hoch. Da zur Realisierung von akzeptablen Abkühlzeiten erheblich höhere Kühlmitteldurchsatzmengen benötigt werden als im abgekühlten Zustand, d. h. das Kühlmittel während dieser Zeiten mit entsprechend höherem Druck in das Kühlsystem eingeleitet werden muß, ergeben sich während dieser Abkühlphase an diesen Dichtungseinrichtungen entsprechend große Leckverluste an Kühlmittel.

Es ist der FR-A-1 350 388 eine Dichtungseinrichtung zu entnehmen, mit der ein Wasserkreislauf für den Rotor eines Turbogenerators gegenüber der Außenluft abgedichtet werden soll. Bei nachlassendem Wasserdruck tritt dabei eine weitere Dichtungseinrichtung in Funktion, bei der ein zwischen den zugehörigen Dichtungsflächen vorhandener Dichtungsspalt geschlossen wird. Zweck dieser bekannten Maßnahme ist es, auch im Stillstand der Maschine eine vollständige Dichtheit des Kühlkreislaufes gegen die äußere Atmosphäre zu erzielen und ein Evakuieren des Kühlkreislaufes zu ermöglichen. Diese Dichtung weist u. a. Kautschukwülste auf, weshalb die Dichtung von vornherein ungeeignet für eine Abdichtung eines kryogenen Kühlmittels ist, wie es zur Kühlung von supraleitenden Wicklungen benötigt wird.

Aufgabe der vorliegenden Erfindung ist es, den Kühlmittelanschlußkopf der eingangs genannten Art mit einer Vorrichtung zur Überleitung eines Kühlmittels von nicht-rotierenden auf rotierende Kühlmittelleitungsteile so auszubilden, daß die Kühlmittelverluste an den Dichtungseinrichtungen seiner Überleitungsvorrichtung während der Abkühlphase der Maschine verhältnismäßig klein sind.

Diese Aufgabe wird erfindungsgemäß dadurch gelöst, daß zur Abdichtung des Zwischenraumes mindestens eine weitere Dichtungseinrichtung vorgesehen ist, bei der ein zwischen den zugehörigen Dichtungsflächen vorhandener Dichtungsspalt in der Weise von außen einstellbar ist, daß während der Abkühlphase der Maschine bei gegenüber dem Nennbetrieb verhältnismäßig geringer Drehzahl und verhältnismäßig hoher Kühlmitteldurchsatzmenge ein kleinster Dichtungsspalt mit gegenüber der übrigen Dichtungseinrichtung wesentlich erhöhtem Strömungswiderstand eingestellt ist, welcher Dichtungsspalt vor dem Übergang zum Nennbetrieb auf ein vorbestimmtes Maß erweitert wird.

Die Vorteile dieser Gestaltung des Kühlmittelanschlußkopfes bestehen insbesondere darin, daß während der Abkühlphase der Wicklung der Dichtungsspalt der weiteren Dichtungseinrichtung so klein gehalten werden kann, daß eine entsprechend gute Abdichtung des Kühlmittels an ihm erfolgt. Während dieser Abkühlphase wird im allgemeinen der Läufer der Maschine höchstens auf einer verhältnismäßig geringen Drehzahl gehalten, so daß nur entsprechend geringe Reibungsverluste und Abnützungseinrichtung auftreten können. Ist die Wicklung dann auf Betriebstemperatur abgekühlt und die Kühlmitteldurchsatzmenge auf einen niedrigen Endwert reduziert, kann der Dichtungsspalt der weiteren Dichtungseinrichtung wieder auf ein vorbestimmtes Maß erweitert werden. Die Abdichtung an der Überleitungsvorrichtung erfolgt dann im wesentlichen nur an der ersten Dichtungseinrichtung, und der Läufer der Maschine kann ohne weiteres auf die Nenndrehzahl des Betriebszustandes gebracht werden.

Gemäß einer vorteilhaften Weiterbildung des Kühlmittelanschlußkopfes nach der Erfindung enthalten die Kühlmittelleitungsteile konzentrisch zueinander angeordnete, sich zum Teil umschließende Rohrendstücke und ist an der Stirnseite eines der Rohrendstücke die weitere Dichtungseinrichtung vorgesehen. An dieser Stelle kann nämlich die weitere Dichtungseinrichtung mit ihrem einstellbaren Dichtungsspalt auf besonders einfache Weise angeordnet werden.

Ferner kann die weitere Dichtungseinrichtung vorteilhaft ein nicht-rotierendes Dichtungsteil enthalten, das mit dem nicht-rotierendes Dichtungsteil enthalten, das mit dem nicht-rotierenden Rohrendstück mechanisch verbunden ist, und kann dieses Rohrendstück in axialer Richtung innerhalb des nicht-rotierenden Kühlmittelleitungsteiles verschiebbar sein. Der zwischen dem nicht-rotierenden Dichtungsteil und einem rotierenden Dichtungsteil ausgebildeten Dichtungsspalt läßt sich so auf einfache Weise mit Hilfe einer entsprechenden Verschiebung des nicht-rotierenden Rohrendstückes einstellen.

Die weitere Dichtungseinrichtung kann außerdem vorteilhaft eine Gleitringdichtung sein. Solche Dichtungen haben einen einfachen Aufbau, und ihr Dichtungsspalt kann leicht durch die Wahl eines entsprechenden Abstandes zwischen ihren Dichtungsteilen eingestellt werden.

Weitere Ausgestaltungen des Kühlmittelkopfes gemäß der Erfindung sind in abhängigen Ansprüchen gekennzeichnet.

Anhand der Figur der schematischen Zeichnung wird ein Ausführungsbeispiel eines Kühlmittelanschlußkopfes gemäß der Erfindung nachfolgend erläutert.

In der Figur ist nur die obere Hälfte eines Kühlmittelanschlußkopfes für die Maschine als Längsschnitt veranschaulicht. Diese in der Figur nicht näher ausgeführte Maschine kann insbesondere ein Turbogenerator sein, der einen Läufer mit einer tiefzukühlenden, supraleitenden Erregerwicklung enthält, die von mindestens einem mitrotierenden, im allgemeinen ebenfalls zu kühlenden Dämpferschild umgeben ist. Zur Reduzierung der Wärmeeinleitung in die tiefgekühlte Wicklung ist diese ferner von Vakuumräumen umgeben. Hierzu kann der gesamte Läufer von einem mitrotierenden Vakuumgehäuse umschlossen sein (vgl. DE-A1-2 339 772 und »Siemens-Forschungs- und Entwicklungsberichte«, Band 5 (1976), Nr. 1, Seiten 10 bis 16). Der Läufer kann aber auch in einem Vakuumraum rotieren.

Der in der Figur nur teilweise ausgeführte Kühlmittelanschlußkopf der Maschine enthält ein feststehendes Kopfteil 2, in welches das seitliche Endstück 3 einer Welle des um eine Rotationsachse 4 drehbar gelagerten Läufers ragt. Dieses Wellenendstück ist starr mit dem in der Figur nicht gezeigten Läufer verbunden und befindet sich im allgemeinen auf der Seite der Maschine, die der Antriebsseite gegenüberliegt. Das Wellenendstück 3 enthält einen äußeren Hohlzylinder 6 auf Raumtemperatur, der konzentrisch um einen inneren Hohlzylinder 7 angeordnet ist, dessen Endstück 8 aus der offenen Stirnseite 9 des äußeren Hohlzylinders 6 ein vorbestimmtes Stück weit hervorsteht. Zwischen dem äußeren Hohlzylinder 6 und dem inneren Hohlzylinder 7 sind konzentrisch zwei Doppelrohre 11 und 12 so angeordnet, daß zwischen dem äußeren Doppelrohr 11 und dem äußeren Hohlzylinder 6 ein äußerer Ringkanal 13 und zwischen dem inneren Doppelrohr 12 und dem inneren Hohlzylinder 7 ein innerer Ringkanal 14 ausgebildet sind. Die beiden Doppelrohre 11 und 12 begrenzen radial nach außen einen Ringraum 16. Sie bestehen jeweils aus zwei konzentrisch zueinander angeordneten Hohlzylindern, die an ihrer Stirnseite untereinander vakuumfest abgeschlossen ist. Die so zwischen den beiden Hohlzylindern jedes Doppelrohres ausgebildeten Innenräume 17 bzw. 18 sind aus Gründen der thermischen Isolation evakuiert.

Das Anschlußkopfteil 2 enthält ferner ein im wesentlichen hohlzylindrisches, nicht-rotierendes Außengehäuse 20, welches das Ende des rotierenden äußeren Hohlzylinders 6 des Wellenendstückes 3 ein Stück weit in axialer Richtung umschließt und sich über ein Hauptlager 22 an diesem Hohlzylinder 6 abstützt. Darüber hinaus enthält das Anschlußkopfteil 2 ein konzentrisch das Endstück 8 des inneren, rotierenden Hohlzylinders 7 des Wellenendstückes 3 umgebendes inneres, im wesentlichen hohlzylindrisches Gehäuseteil 23, das sich über ein Nebenlager 25 an dem Endstück 8 abstützt. Dieses Gehäuseteil 23 ist über ein im wesentlichen ringscheibenförmiges Stirnteil 26 mit dem Außengehäuse 20 starr verbunden. Die Teile 20, 23 und 26 des Anschlußkopfteiles 2 begrenzen einen im wesentlichen vor der Stirnseite 9 des äußeren Hohlzylinders 6 des Wellenendstückes 3 liegenden Innenraum innerhalb des Anschlußkopfteiles 2. Zur Abdichtung dieses Innenraumes ist parallel zu dem Lager 22 zwischen dem nicht-rotierenden Außengehäuse 20 und dem rotierenden Hohlzylinder 6 ein Dichtungssystem 29 vorgesehen. In entsprechender Weise ist auch das innere Gehäuseteil 23 gegenüber dem Endstück 8 des inneren Hohlzylinders 7 mittels eines Dichtungssystems 30 abgedichtet. Diese Dichtungssysteme können beispielsweise Ferrofluidikdichtungen sein, wie sie aus der DE-A1-2 034 213 bekannt sind.

An dem Anschlußkopfteil 2 ist die Zu- und Abführung des zur Kühlung der supraleitenden Erregerwicklung erforderlichen Kühlmittels, das im allgemeinen Helium ist, in das bzw. aus dem Wellenstück 3 des Läufers vorgesehen. Hierzu wird flüssiges Helium A in den Ringraum 16 zwischen den Doppelrohren 11 und 12 über eine Zuleitungsvorrichtung 32 eingeleitet. Diese Vorrichtung enthält zwei in den Ringraum 16 hineinragende, konzentrisch zur Rotationsachse 4 angeordnete Doppelrohrstücke 33 und 34, zwischen denen ein ringförmiger Zuführungskanal 35 ausgebildet ist. Dieser achsenparallel verlaufende Zuführungskanal ist an seinem in den Innenraum des Anschlußkopfteiles 2 ragenden Ende mit einem radial verlaufenden Zuführungskanal 37 verbunden, der zwischen zwei ringscheibenförmigen, doppelwandig gestalteten Leitungsteilen 38 und 39 ausgebildet ist. Dieser radiale Zuführungskanal 37 ist an einen weiteren, achsenparallel verlaufenden Zuführungskanal 41 angeschlossen, dessen Abstand zur Rotationsachse 4 größer als vergleichsweise der entsprechende Abstand des Zuführungskanals 35 ist. Dieser im Querschnitt ringförmige Zuführungskanal 41 ist zwischen zwei Doppelrohrstücken 42 und 43 ausgebildet, die aus dem mit einer entsprechenden, abgedichteten Durchführung 44 versehenen Stirnteil 26 des Anschlußkopfteils 2 hinausragen und die mit einem Anschlußflansch 45 versehen sind, an den mittels einer in der Figur nicht dargestellten Verbindungsleitung eine das flüssige Helium A liefernde Kälteeinrichtung angeschlossen werden kann. Da alle heliumführenden Teile der Zuführungsvorrichtung 32 doppelwandig ausgeführt sind, können zur Reduzierung der Wärmeeinleitung auf das flüssige Helium A die zwischen jeweils benachbarten Wänden vorhandenen Räume 47 bzw. 48 evakuiert werden.

Gemäß dem Ausführungsbeispiel wird durch die Zuleitungsvorrichtung 32 der in dem Anschlußkopfteil 2 ausgebildete, von den Bauteilen 20, 23, 26 begrenzte Innenraum in zwei getrennte Teilräume 50 und 51 unterteilt. Gegebenenfalls können jedoch diese beiden Teilräume auch untereinander verbunden sein, indem beispielsweise statt der beiden doppelwandigen Leitungsteile 38 und 39 der Zuleitungsvorrichtung 32 mehrere radial verlaufende, untereinander beabstandete Doppelrohrstücke vorgesehen werden.

Um ein direktes Zurückfließen des in den Ringraum 16 eingespeisten flüssigen Heliums A in die Teilräume 50 und 51 des Innenraumes des Anschlußkopfteiles 2 zu verhindern, ist in dem zwischen den Rohren 11 und 33 ausgebildeten Ringraum 53 sowie in dem entsprechenden Ringraum 54 zwischen den Rohren 12 und 34 jeweils mindestens eine ringförmige Dichtungseinrichtung 56 bzw. 57 vorgesehen. Diese in der Figur nur angedeuteten Dichtungseinrichtungen können beispielsweise Labyrinthdichtungen oder Lippendichtungen sein. Über ihre Dichtungsspalte gelangt bei verhältnismäßig kleinen Druckunterschieden zwischen beiden Seiten jeder Dichtungseinrichtung nur ein verhältnismäßig geringer, mit $A_1$ bzw. $A_2$ bezeichneter Anteil des Heliums A in den Innenraum 50 bzw. 51 des Anschlußkopfteils 2.

In diese Innenräume 50 und 51 wird darüber hinaus das in dem Läufer der Maschine erwärmte, mit $A_3$ und $A_4$ bezeichnete Helium über die Ringkanäle 13 und 14 eingespeist und vermischt sich dort mit dem Helium $A_1$ bzw. $A_2$. Zur Abführung des Heliumgemisches $A_1$, $A_3$ aus dem Innenraum 50 ist ein Flansch 59 an dem Außengehäuse 20 des Anschlußkopfteiles 2 vorgesehen. In entsprechender Weise wird das Heliumgemisch $A_2$, $A_4$ aus dem Innenraum 51 über einen Flansch 60 im Stirnteil 26 des Anschlußkopfteiles 2 ausgeleitet. An diesen Flanschen sind in der Figur nicht dargestellte und mit der Kälteeinrichtung verbundene Rückführungsleitungen für das Kühlmittel angeschlossen.

Bei der Maschine gemäß dem Ausführungsbeispiel nach der Figur ist angenommen, daß die zur thermischen Isolation der kalten Teile des Läufers, insbesondere der supraleitenden Erregerwicklung, erforderlichen Vakua durch ständiges Abpumpen entsprechender Vakuumräume aufrechterhalten werden. Hierzu dient der innere Hohlzylinder 7 des Wellenendstücks 3 als mitrotierendes Evakuierungsrohr. Das Endstück 8 dieses Hohlzylinders mündet deshalb in einen achsnahen Teilraum 62 des Anschlußkopfteiles 2, der von dem inneren Gehäuseteil 23, dem Stirnteil 26 und dem Nebenlager 25 bzw. dem Dichtungssystem 30 begrenzt ist. Zur Evakuierung dieses Teilraumes 62 ist das Stirnteil 26 mit einem entsprechenden Anschlußflansch 63 versehen, an den eine externe Evakuierungsvorrichtung angeschlossen werden kann. Das zwischen dem hohlzylindrischen Gehäuseteil 23 und dem Endstück 8 des Evakuierungsrohres 7 befindliche Dichtungssystem 30 dient dabei zur vakuumfesten Abdichtung des Teilraumes 62 gegenüber dem Innenraum 51 des Anschlußkopfteiles 2.

Zur Kühlung der Erregerwicklung des Läufers der Maschine soll im Betriebszustand, d. h. bei einer vorbestimmten Drehzahl des abgekühlten Läufers von beispielsweise 50 sec$^{-1}$, vorteilhaft der sogenannte Selbstpump-Effekt in Thermosyphon-Schleifen ausgenutzt werden. Hierzu muß ein entsprechend ausgelegtes Kühlsystem mit Wärmetauschern versehen sein, die sich auf einem großen Radius befinden. Das aus der Erregerwicklung austretende Kühlmittel tritt noch kalt in diese Wärmetauscher ein und erwärmt sich dort auf Temperaturen, die beispielsweise zwischen etwa 100 und 300 K liegen, bevor es dann wieder auf einen kleineren Radius zurückgeführt und über die Kühlmittel-überleitungsvorrichtung des Anschlußkopfes nach außen abgeleitet wird. Zum Beispiel muß im Betriebszustand eines 2000 MVA-Generators mit einem Helium-Durchsatz von etwa 5 bis 10 g/sec der Druckabfall in diesem Wärmeaustauschern auf Werte unter etwa 40 mbar begrenzt bleiben, damit der Selbstpump-Effekt zu einer erwünschten Temperaturabsenkung der Erregerwicklung führt.

Während der Abkühlphase der Maschine müssen jedoch insbesondere die Strömungswiderstände dieser Wärmeaustauscher überwunden werden. So sind beispielsweise Druckdifferenzen in der Größenordnung von 1 bis 2 bar erforderlich, um die in der Anfangsphase benötigten Abkühlmengen von zum Beispiel etwa 100 g/sec durch das Kühlsystem der Maschine pumpen zu können. Solche Druckdifferenzen führen aber an den Dichtungseinrichtungen 56 und 57 zunächst zu einer etwa 10 bis 20 mal größeren Leckrate im Vergleich zum Betriebszustand, bei dem beispielsweise nur eine Druckdifferenz von etwa 0,1 bar über den Dichtungseinrichtungen herrscht. Durch die eintretende Abkühlung der Spalte der Dichtungseinrichtungen kann ferner noch eine weitere Verkleinerung ihrer Strömungswiderstände und damit eine weitere Zunahme der Leckverluste eintreten.

Gemäß der Erfindung ist deshalb der Kühlmittelanschlußkopf noch mit weiteren Dichtungseinrichtungen versehen, die während der Abkühlphase des Läufers wirksam sein sollen. Hierzu wird der die Dichtungseinrichtung 56 enthaltende Ringraum 53 sowie der die Dichtungseinrichtung 57 enthaltende Ringraum 54 jeweils zusätzlich noch mit einer Gleitringdichtung 65 bzw. 66 gegenüber dem Innenraum 50 bzw. 51 abgedichtet. Diese Gleitringdichtungen sind dabei vorteilhaft so gestaltet, daß sie in bezüglich der Rotationsachse radialen Ebenen liegende Dichtungsflächen bzw. Dichtungsspalte haben. Sie enthalten deshalb jeweils ein ringscheibenförmiges, sich in radialer Richtung erstreckendes Bauteil 67 bzw. 68, das an der ringscheibenförmigen Stirnseite des Doppelrohres 11 bzw. des Doppelrohres 12 gleitend anliegt. Die Gleitringdichtungen 65 und 66 sind vorteilhaft an der Helium-Zuleitungsvorrichtung 32 befestigt. Diese Zuleitungsvorrichtung ist in achsenparalleler Richtung verschiebbar gestaltet, so daß mit ihrer Hilfe die zwischen den Gleitringdichtungen und den entsprechenden Doppelrohren ausgebildeten Dichtungsspalte einstellbar sind. Die Doppelrohrstücke 42 und 43 der Zuleitungsvorrichtung 32 sind deshalb durch die abgedichtete Durchführung 44 des Stirnteils 26 verschiebbar hindurchgeführt. Zur Abdichtung dienen beispielsweise O-Ringe 71 und 72 zwischen den Doppelrohrstücken und dem Stirnteil.

Während der Abkühlphase der Erregerwicklung, bei welcher der Läufer der Maschine höchstens mit niedrigen Drehzahlen von beispielsweise 2 sec$^{-1}$ rotiert, wird dann die Helium-Zuleitungsvorrichtung 32 soweit axial in Richtung auf den Läufer zu in den Anschlußkopfteil 2 hineingeschoben, bis die ringförmigen Bauteile 67 und 68 der Gleitringdichtungen 65 und 66 an den Stirnseiten der Doppelrohre 11 bzw. 12 abdichtend anliegen. Hierzu können beispielsweise entsprechend vorgespannte, konzentrisch zueinander angeordneter Federbälge 74 und 75 zwischen dem Stirnteil 26 und dem Anschlußflansch 45 dienen. Über einen Anschlag 76 kann dabei der Federweg der Bälge auf eine vorbestimmte, minimale Länge L begrenzt werden. Da der Abkühlungsvorgang bei niedriger Drehzahl des Läufers verläuft, unterliegen die Gleitringdichtungen keinen besonderen Abnutzungen. Ihre Dichtkraft wird auch während der Abkühlphase mit Hilfe der Federbälge 74 und 75 aufrechterhalten, wobei Schrumpfungseffekte aufgrund der Abkühlung kompensiert werden.

In der Endphase des Abkühlungsvorganges, d. h. unmittelbar vor Erhöhung der Drehzahl des Läufers auf die Nenndrehzahl von beispielsweise 50 sec$^{-1}$, wird dann die Zuleitungsvorrichtung 32 mit ihren Gleitringdichtungen 65 und 66, beispielsweise durch ein entsprechendes Verstellen des Anschlages 76, in axialer Richtung soweit zurückgezogen, daß ein vorbestimmter, minimaler Abstand der Dichtungsflächen an den Gleitringdichtungen 65 und 66 eingehalten wird. Die Durchsatzmenge an Kühlmittel ist dann schon auf einen niedrigeren, stationären Endwert reduziert, und die Leckverluste an den Dichtungseinrichtungen 56 und 57 bleiben tolerierbar. Bei Rotieren der Maschine mit Nenndrehzahl können auf diese Weise eine Reibungswärme an den Dichtungsflächen der Gleitringdichtungen 65 und 66 und somit entsprechende Abnützungen dieser Dichtungen vermieden werden.

Um ein gleichmäßiges Anliegen der ringscheibenförmigen Bauteile 67 und 68 der Gleitringdichtungen 65 und 66 an den Stirnflächen des Doppelrohres 11 bzw. des Doppelrohres 12 und damit zumindest annähernd gleiche Abdichtungseigenschaften dieser Dichtungen zu gewährleisten, ist die Gleitringdichtung 65 starr auf dem Doppelrohr 33 befestigt, während die Gleitringdichtung 66 auf dem Doppelrohr 34 in einem vorbestimmten Maße verschiebbar ist. Hierzu dient ein sich in axialer Richtung erstreckender, vorgespannter Federbalg 78 zwischen dem ringscheibenförmigen Leitungsteil 39 der Zuleitungsvorrichtung 32 und dem ringscheibenförmigen Bauteil 68 der Dichtung 66. Dieser Federbalg dient auch mit zur Abdichtung der Gleitringdichtung 66 gegenüber dem Doppelrohr 34. Zur Begrenzung der maximalen Ausdehnung des Federbalges bzw. des Vorrückens der Dichtung 66 auf das Doppelrohr 12 ist ein Anschlagselement 79 auf dem Doppelrohr 12 befestigt.

Bei dem Ausführungsbeispiel gemäß der Figur wurde angenommen, daß das Kühlmittel A in einem vorbestimmten Abstand zur Rotationsachse in achsenparalleler Richtung von einem feststehenden in ein rotierendes Leitungsteil eingespeist wird. Gemäß der Erfindung können jedoch ebensogut auch zusätzliche einstellbare Dichtungseinrichtungen für einen Kühlmittelanschlußkopf mit zentraler Kühlmitteleinspeisung vorgesehen werden.

Im Ausführungsbeispiel der Figur wurde ferner angenommen, daß die Ringräume 53 und 54 jeweils mit einer einzigen Dichtungseinrichtung 65 bzw. 66 zusätzlich während der Abkühlphase abzudichten sind. Gegebenenfalls können jedoch auch mehrere solcher Dichtungseinrichtungen zum Abdichten jedes Ringraumes vorgesehen werden.

Der Kühlmittelanschlußkopf gemäß der Erfindung ist insbesondere für Läufer mit supraleitenden Erregerwicklungen geeignet, zu deren Kühlung der Selbstpump-Effekt ausgenutzt werden soll und dessen zusätzliche Dichtungseinrichtungen weitgehend berührungslose Spalte zwischen rotierenden und nicht-rotierenden Teilen haben.

**Patentansprüche**

1. Kühlmittelanschlußkopf für eine elektrische Maschine, die einen um eine Achse drehbar gelagerten Läufer mit einer von einem Kühlmittel tiefzukühlenden, supraleitenden Wicklung enthält, mit einer Vorrichtung zur Einspeisung des Kühlmittels aus einem nicht-rotierenden Kühlmittelleitungsteil in einen rotierenden, mit dem Läufer verbundenen Kühlmittelleitungsteil, die mindestens eine Dichtungseinrichtung (56, 57) enthält, welche zur Abdichtung eines zwischen diesen Leitungsteilen ausgebildeten Zwischenraumes (53,54) dient, und die im Betriebszustand der Maschine eine vorbestimmte, von der an ihr herrschenden Druckdifferenz abhängige Leckrate zuläßt, dadurch gekennzeichnet, daß zur Abdichtung des Zwischenraumes (53 bzw. 54) mindestens eine weitere Dichtungseinrichtung (65 bzw. 66) vorgesehen ist, bei der ein zwischen den zugehörigen Dichtungsflächen vorhandener Dichtungsspalt in der Weise von außen einstellbar ist, daß während der Abkühlphase der Maschine bei gegenüber dem Nennbetrieb verhältnismäßig geringer Drehzahl und verhältnismäßig hoher Kühlmitteldurchsatzmenge ein kleinster Dichtungsspalt mit gegenüber der übrigen Dichtungseinrichtung wesentlich erhöhtem Strömungswiderstand eingestellt ist, welcher Dichtungsspalt vor dem Übergang zum Nennbetrieb auf ein vorbestimmtes Maß erweitert wird.

2. Kühlmittelanschlußkopf nach Anspruch 1, dadurch gekennzeichnet, daß die Kühlmittelleitungsteile konzentrisch zueinander angeordnete, sich zum Teil umschließende Rohrendstücke (33, 34 und 11, 12) enthalten und daß an der Stirnseite eines der Rohrendstücke die weitere Dichtungseinrichtung (65, 66) vorgesehen ist.

3. Kühlmittelanschlußkopf nach Anspruch 1 oder 2, dadurch gekennzeichnet, daß die weitere Dichtungseinrichtung (65, 66) eine Gleitringdichtung ist.

4. Kühlmittelanschlußkopf nach einem der Ansprüche 1 bis 3, gekennzeichnet durch einen in einer bezüglich der Rotationsachse (4) radialen Ebene verlaufenden Dichtungsspalt der weiteren Dichtungseinrichtung (65, 66).

5. Kühlmittelanschlußkopf nach einem der Ansprüche 2 bis 4, dadurch gekennzeichnet, daß die weitere Dichtungseinrichtung (65, 66) ein nicht-rotierendes Dichtungsteil (67, 68) enthält, das mit dem nicht-rotierenden Rohrstück (33, 34) mechanisch verbunden ist, und daß dieses Rohrendstück (33, 34) in axialer Richtung innerhalb des nichtrotierenden Kühlmittelleitungsteiles (2) verschiebbar ist.

6. Kühlmittelanschlußkopf nach einem der Ansprüche 2 bis 5, dadurch gekennzeichnet, daß sich die rotierende Dichtfläche der weiteren Dichtungseinrichtung (65, 66) an der Stirnseite des rotierenden Rohrendstückes (11, 12) befindet.

7. Kühlmittelanschlußkopf nach Anspruch 5 oder 6, gekennzeichnet durch einen axialen, vorbestimmten Druck der Dichtungsteile der weiteren Dichtungseinrichtung (65, 66) bei niedriger Drehzahl der Maschine auf ihre gemeinsame Dichtungsfläche mittels eines entsprechend vorgespannten, auf das nicht-rotierende Rohrendstück (33, 34) wirkenden Federsystems (74, 75).

8. Kühlmittelanschlußkopf nach Anspruch 7, dadurch gekennzeichnet, daß der maximale Federweg des Federsystems (74, 75) über einen einstellbaren Anschlag (76) auf eine vorbestimmte Länge (L) begrenzt ist.

9. Kühlmittelanschlußkopf nach einem der Ansprüche 1 bis 8, dadurch gekennzeichnet, daß der Dichtungsspalt der weiteren Dichtungseinrichtung (65, 66) bei Nenndrehzahl der Maschine mittels eines verstellbaren Anschlages (76) auf einen definierten minimalen Abstand der Dichtungsflächen einstellbar ist.

## Claims

1. A coolant connection head for an electrical maschine which includes a rotor mounted for rotation about an axis and having a superconductive winding which is to be cooled to a low temperature by a coolant, comprising apparatus for feeding the coolant from a non-rotating coolant supply line component into a rotating coolant supply line component which is connected to the rotor, which apparatus includes at least one sealing device (56, 57) which serves to seal an interspace (53, 54) located between these supply line components, and which, when the maschine is in the operating state, permits a predetermined rate of leakage which is dependent upon the pressure difference prevailing thereat, characterised in that for the sealing of the interspace (53 or 54), there is provides at least one further sealing device (65 or 66 respectively), in which a sealing gap present between the associated sealing surface can be adjusted from the exterior; in that during the cooling phase of the maschine, when, in contrast with normal operation, the rotation speed is relatively low and the coolant throughput is relatively high, a minimum sealing gap is set with a flow resistance which is substantially increased in comparison with the remainder of the sealing device, which sealing gap is widened to a predetermined extent before the transition to normal operation.

2. A coolant connection head according to Claim 1, characterised in that the coolant supply line components include tubular end components (33, 34 and 11, 12) which are arranged coaxially to one another and which partially surround one another; and that the additional sealing device (65, 66) is arranged at the end face of one of the tubular end components.

3. A coolant connection head according to Claim 1 or Claim 2, characterised in that the additional sealing device (65, 66) is a sliding ring seal.

4. A coolant connection head according to one of Claims 1 to 3, characterised in that the additional sealing device (65, 66) has a sealing gap which runs in a plane radial to the axis of rotation (4).

5. A coolant connection head according to one of Claims 2 to 4, characterised in that the additional sealing device (65, 66) contains a non-rotating sealing element (67, 68) which is mechanically connected to the non-rotating tubular end component (33, 34); and that this tubular end component (33, 34) is displaceable in the axial direction in the non-rotating coolant supply line component (2).

6. A coolant connection head according to one of Claims 2 to 5, characterised in that the rotating sealing surface of the additional sealing device (65, 66) is located at the end face of the rotating tubular end component (11, 12).

7. A coolant connection head according to Claim 5 or Claim 6, characterised by a predetermined axial pressure of the sealing elements of the additional sealing device (65, 66), at a low rotation speed of the machine, on their common sealing surface produced by means of an appropriately prestressed spring system (74, 75) which acts upon the non-rotating tubular end component (33, 34).

8. A coolant connection head as claimed in Claim 7, characterised in that the maximum spring travel of the spring system (74, 75) is limited to a predetermined lenght (L) by an adjustable stop means (76).

9. A coolant connection head according to one of Claims 1 to 8, characterised in that the sealing gab of the additional sealing device (65, 66) can be adjusted, at the rated rotational speed of the maschine, by an adjustable stop means (76) to a determinate minimum interval between the sealing surfaces.

## Revendications

1. Tête de raccordement pour un agent réfrigérant destinée à une machine électrique à enroulement rotorique, qui contient un rotor monté tournant par rapport à un axe et ayant un enroulement supraconducteur refroidi à très basse température par un agent réfrigérant, comprenant un dispositif pour faire passer l'agent réfrigérant d'un tronçon de conduit pour l'agent réfrigérant qui ne tourne pas à un tronçon de conduit pour l'agent réfrigérant qui tourne et qui est relié au rotor, ce dispositif comprenant un dispositif (56, 57) d'étanchéité, qui sert à rendre étanche une chambre (53, 54) intermédiaire formée entre ces tronçons de conduit et qui, quand la machine est en fonctionnement, autorise un taux de fuite déterminé à l'avence en fonction de la différence de pression qui y règne, caractérisée en ce que pour rendre étanche la chambre (53 et 54) intermédiaire est prévu au moins un autre dispositif (65 et 66) d'étanchéité, dans lequel un intervalle d'étanchéité, se trouvant entre les surfaces d'étanchéité qui le déterminent, peut être réglé de l'extérieur de manière à avoir, pendant la phase de refroidissement de la machine alors que le nombre de tours est relativement petit par rapport au fonctionnement nominal et alors que le débit d'agent réfrigérant est relativement élevé, un intervalle d'étanchéité très petit avec une résistance à l'écoulement considérablement plus élevée par rapport à l'autre dispositif d'étanchéité, cet intervalle d'étanchéité étant élargi à une dimension déterminée à l'avance avant le passage au fonctionnement nominal.

2. Tête de raccordement pour un agent réfrigérant suivant la revendication 1, caractérisée en ce que les tronçons de conduit pour l'agent réfrigérant comprennent des embouts tubulaires (33, 34 et 11, 12) disposés concentriquement l'un à l'autre et se refermant en partie sur eux-mêmes et en ce que l'autre dispositif (65, 66) d'étanchéité est prévu sur la partie frontale de l'un des embouts tubulaires.

3. Tête de raccordement pour un agent réfrigérant suivant la revendication 1 ou 2, caractérisée en ce que l'autre dispositif (65, 66) d'étanchéité est une garniture d'étanchéité à anneau glissant.

4. Tête de raccordement pour un agent réfrigérant suivant l'une des revendications 1 à 3, caractérisée par un intervalle d'étanchéité de l'autre dispositif (65, 66) d'étanchéité, qui s'étend dans un plan radial par rapport à l'axe (4) de rotation.

5. Tête de raccordement pour un agent réfrigérant suivant l'une des revendications 2 à 4, caractérisé en ce que l'autre dispositif (65, 66) d'étanchéité comprend une pièce (67, 68) d'étanchéité, qui ne tourne pas et qui est reliée mécaniquement à l'embout (33, 34) tubulaire qui ne tourne pas, et en ce que cet embout (33, 34) tubulaire peut coulisser suivant la direction axiale à l'intérieur du tronçon (2) de conduit pour l'agent réfrigérant qui ne tourne pas.

6. Tête de raccordement pour un agent réfrigérant suivant l'une des revendications 2 à 5, caractérisée en ce que les surfaces d'étanchéité qui tournent de l'autre dispositif (65, 66) d'étanchéité se trouvent sur la partie frontale de l'embout (11, 12) tubulaire qui tourne.

7. Tête de raccordement pour un agent réfrigérant suivant la revendication 5 ou 6, caractérisée une pression axiale déterminée à l'avance des parties d'étanchéité de l'autre dispositif (65, 66) d'étanchéité lorsque le nombre de tours de la machine est petit, sur ses surfaces d'étanchéité communes, à l'aide d'un système (74, 75) à ressort, qui est armé au préalable d'une manière correspondante et qui agit sur l'embout (33, 34) tubulaire qui ne tourne pas.

8. Tête de raccordement pour un agent réfrigérant suivant la revendication 7, caractérisée en ce que la course élastique maximale du système (74, 75) à ressort est limitée à une longueur (L) déterminée à l'avance par une butée (76) réglable.

9. Tête de raccordement pour un agent réfrigérant suivant l'une des revendications 1 à 8, caractérisée en ce que l'intervalle d'étanchéité de l'autre dispositif (65, 66) d'étanchéité peut être réglé, pour le nombre de tours nominal de la machine, à un écartement minimal défini des surfaces d'étanchéité à l'aide d'une butée (76) réglable.